# EUROPEAN PATENT APPLICATION

(11) **EP 4 841 975 A1**
(43) Date of publication of application: **18.11.2026**
(21) Application number: 25176067.4
(22) Date of filing: 13.05.2025
(51) Int. Cl.: H04N 19/132, H04N 19/137, H04N 19/139, H04N 19/176, H04N 19/507, H04N 19/513

(54) **A METHOD OF CONTROLLING ENCODING OF IMAGE FRAMES**

(71) Applicant: Axis AB, 223 69 Lund (SE)
(72) Inventor: Pettersson, Mattias, 223 69 Lund (SE); Goudar, Vijay, 223 69 LUND (SE)
(74) Representative: AWA Sweden AB

(57) **Abstract**

A method of controlling encoding of image frames is described. The method comprises: obtaining (S402) image block statistics for a sequence of non-encoded image frames comprising block sum values or block variance values; determining (S404) a group of neighboring image blocks in which each image block has a cyclic variation of block sum values or block variance values during the sequence of non-encoded image frames; generating (S406) instructions for an encoder to encode the identified group of neighboring image blocks as skip blocks or having identical motion vectors; and providing (S408) the instructions to an encoder for encoding the sequence of non-encoded image frames. A processing device for controlling encoding of image frames is also disclosed.

## Description

### Technical field

The present invention relates to the technical field of digital image processing, specifically to methods and systems for efficient video encoding. More particularly, it pertains to techniques for identifying and exploiting periodic patterns in image sequences to improve coding efficiency.

### Background

Image and video compression techniques are widely used in various applications, including surveillance systems, broadcasting, and online streaming. Efficient compression methods enable reduced storage requirements and faster transmission rates while maintaining acceptable image quality.

Conventional video encoders employ various prediction modes, such as intra-prediction and inter-prediction, to reduce temporal redundancy between consecutive frames. However, these methods can be computationally intensive and may not effectively capture periodic patterns in certain types of content, such as scenes with repetitive motions or textures. Periodic patterns may occur due to mechanical vibrations in objects of the camera view, for example in the case of vibrating seats in a bus environment monitored by an onboard camera. In addition, the seats may have a detailed or repetitive texture that further adds complexity to the encoding. Periodic patterns may also occur due to repeating lighting variations in image regions, caused by for example flickering natural lighting.

An encoder may, in addition, interpret the periodic patterns as motion, which it demonstratively is, and since it is motion it could be interpreted as being an important foreground object, and thus encoded with higher quality, which could be less fortunate.

For obvious reasons, it is not desirable to spend high bitrates on encoding image areas of low interest, such as image areas depicting empty bus seats.

Existing approaches for alleviating the described issues often rely on manual configuration or empirical thresholds to determine when to apply specific encoding modes. Such approaches may lead to suboptimal performance and inefficient use of computational resources. There is thus a need for efficient and adaptive methods for improving overall encoding efficiency.

### Summary of the invention

An aim of the present invention is to provide methods for improving encoding efficiency. Specifically, an aim is to improve encoding efficiency for video recording by onboard cameras, that is cameras mainly arranged for monitoring a vehicle interior. Another aim of the present invention is to provide methods for improving encoding efficiency with less or no requirements for manual configuration.

The present invention is defined by the appended claims. According to a first aspect, there is provided a method as defined by **claim 1.** The claimed method for controlling encoding of image frame comprises the acts of:
- obtaining image block statistics for a sequence of non-encoded image frames comprising block sum values or block variance values;
- determining a group of neighboring image blocks in which each image block has a cyclic variation of block sum values or block variance values during the sequence of non-encoded image frames;
- generating instructions for an encoder to encode the identified group of neighboring image blocks as skip blocks or having identical motion vectors; and
- providing the instructions to an encoder for encoding the sequence of non-encoded image frames.

A realization behind the invention is a noted unnecessary high bitrate for video that includes one or more image areas with cyclic variations in its pixel values, either due to mechanical vibrations or due to varying illumination in an area of a scene that the images represent. By mechanical vibration is meant that a depicted object is physically moving in a cyclic manner relative to the camera. This is a typical occurrence in a vehicle environment where seats and other onboard objects are mechanically vibrating relative to an onboard camera due to vehicle movements. By varying illumination is meant that the image region is illuminated in a cyclic manner, by natural or artificial light. This is also a phenomenon typical for a vehicle environment, especially during vehicle movement, when outside light in combination with the vehicle's motion results in fields of increased or decreased illumination travelling across the imaged scene. It has been noticed that encoding of image regions with the described types of variations (mechanical vibrations and lighting variations) results in an increase in bitrate due to the need for encoding periodic changes in the images. The inventors have realized that affected image regions can be identified using image blocks statistics that are determined for non-encoded image frames. In particular, image-block statistics representing block sum values and block variance values are useful. The image regions with variations are determined by identifying a cyclic pattern in the block sum values or the block variance values. The cyclic pattern is directly caused by the cyclic variation of the image blocks' pixel values, being the case for mechanical vibration, or the cyclic illumination of the image areas depicted by the image blocks. Identifying image regions depicting objects with mechanical vibration or varying illumination before the image frames are encoded, enables for instructing the encoder to encode these image regions in a more bitrate efficient way. More specifically, the image regions may be encoded using skip blocks or using coding blocks having identical motion vectors, meaning that the motion vector is set to the same in all coding blocks of the image area. The first alternative results in lower bitrate, however the visual appearance of the corresponding image area will be frozen. The second alternative maintains some degree of movement in the visual appearance of the corresponding image area, however, at the cost of a slightly higher bitrate. Both alternatives save processing time in the encoder since motion vectors and residuals when encoding the image blocks do not need to be determined (since they are given by the instructions). Depending on how important visual appearance is compared to bitrate efficiency, one of the first and second alternatives can be chosen.

In one embodiment, the method comprises generating instructions for an encoder to encode the identified group of neighboring image blocks as having identical motion vectors. The identical motion vector may be set to zero for all images in the image sequence.

Alternatively, the identical motion vector is determined by analyzing groups of neighboring encoded blocks to find a representative motion vector. Naturally, the identical motion vector is different between images in the image sequence to reflect the cyclic variation in the image area.

The analysis may be performed on previously encoded image frames, or be performed by test encoding the image blocks. The identical motion vector may be determined by calculating an average motion vector for the previously encoded image blocks or for the test encoded image blocks. In one variant, the method comprises scaling down the identified group of neighboring image blocks before test encoding to decrease the amount of generated motion vectors that references areas with a similar appearance as the block to be encoded due to noise. In other words, fewer motion vectors that point to pixel areas that happen to be similar due to noise in the pixel areas are generated when applying downscaling before the test encoding. The generated motion vectors thus become more representative of real motion in the scene, for example vibrating movement of a backrest.

In addition to setting identical motion vectors for a group of neighboring image blocks, the residual for the image blocks may be set to the same value for the group. Identical residuals in combination with identical motion vectors result in a lowered bit cost for the encoded images, in particular for the encoded image blocks. In such an embodiment, the method comprises generating instructions for the encoder to encode the identified group of neighboring image blocks as having identical motion vectors and identical residuals. The identical residual may be set to zero.

In one embodiment, the method further comprises obtaining a coding block size from the encoder and setting a size of the image block to correspond to the coding block size for obtaining image block statistics. In other words, the image blocks that the statistics are generated have a size that corresponds to the size of the coding blocks that the encoder encodes. The sizes can, in general, be set independently, however in this embodiment they are set to correspond. A better precision in identifying image blocks with variation that will cause increased bitrate can thereby be achieved.

In one embodiment, the sequence of non-encoded image frames has an FPS value set in view of an expected (mechanical) vibration frequency, to avoid wrongly identified periodic patterns caused by aliasing. For this purpose, the method may further comprise determining an FPS value in view of an obtained vibration frequency. The vibration frequency corresponds to an expected vibration of objects in the scene. The FPS value can be selected to be at least twice the vibration frequency to avoid aliasing effects when identifying cyclic variations in block sum values or blocks variance values. In addition, a maximum FPS value may be set, for example 10 times the obtained vibration frequency, to avoid unnecessary high processing.

According to a second aspect, there is provided a processing device of a video capturing device according to **claim 12.** The processing device may form part of a controller. The processing device is adapted to
- obtaining, from an image pipeline processor of the video capturing device, image block statistics for a sequence of non-encoded image frames comprising block sum values or block variance values;
- identifying a group of neighboring image blocks in which each image block has a cyclic variation of block sum values or block variance values during the sequence of non-encoded image frames;
- generating instructions for an encoder to encode the identified group of neighboring image blocks as skip blocks or having identical motion vectors; and
- providing the instructions to the encoder of the video capturing device for encoding the sequence of image frames.

Variations described for the first aspect are valid for the second aspect as well, where applicable.

In one embodiment, the processing device is arranged in an onboard camera for a vehicle, for example an onboard surveillance camera for a bus, train or taxi environment.

According to a third aspect, there is provided a computer program product according to **claim 15.** The computer program product comprises program code portions configured to perform the method according to the first aspect, when executed by a processing device.

A further scope of applicability of the present invention will become apparent from the detailed description given below. It is to be understood that the invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The invention will now be described in more detail by way of example and with reference to the accompanying schematic drawings, in which:
Fig. 1 illustrates a bus environment as viewed by an onboard camera, and details of a seat in a sequence of images.
Fig. 2a illustrates an image region partly encoded with skip blocks.
Fig. 2b illustrates image regions in an image sequence encoded with identical motion vectors.
Fig. 3 illustrates a system of components in an image capturing device.
Fig. 4 is a flow chart for a method according to an embodiment.

### Detailed description of embodiments

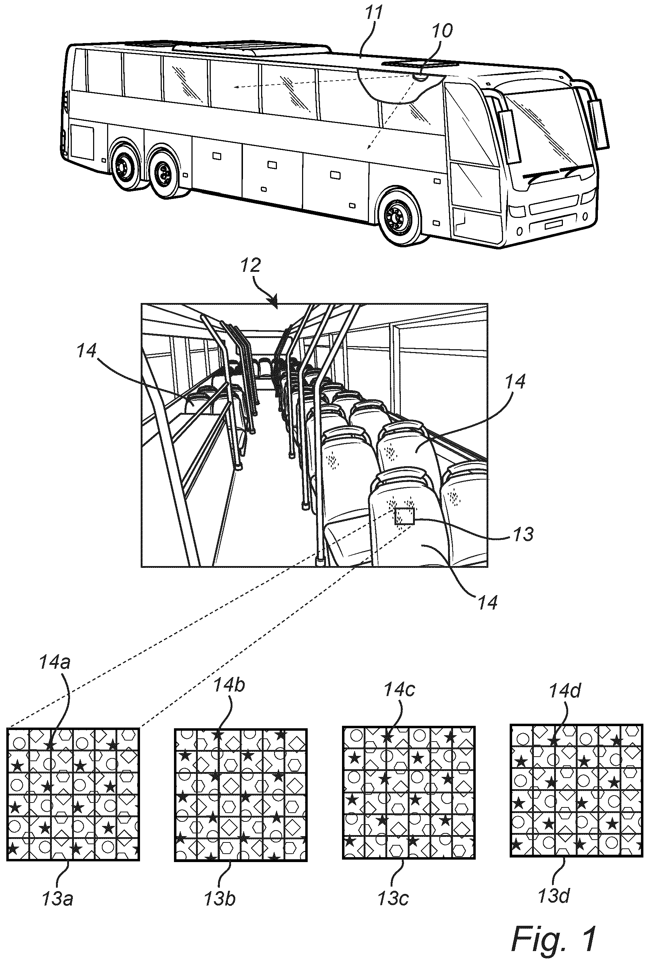

Fig. 1 illustrates a surveillance environment for a monitoring camera 10 mounted inside a bus 11. A camera adapted for monitoring the inside of a vehicle can be referred to as an onboard camera. The camera 10 is typically arranged to continuously capture video for storing on a recorder onboard or stream the video to a server for storage. In the illustrated example, the camera 10 covers a scene 12 being the interior of the bus 11, with a couple of rows of empty bus seats 14. The seats 14 are covered in a textured fabric.

The bitrate of the video acquired by the camera 10 has a large impact on storage requirements and/or streaming requirements due to the large amount of acquired video. It is thus interesting to make the encoding of the acquired video in a bitrate efficient manner in order to keep the requirements low. The inventors have identified two sources to increased bitrate that are common for scenes monitored by onboard cameras, for example the scene 12 monitored by the camera 10.

A first source is a mechanical vibration of the bus 11 which causes objects therein to vibrate as well. Objects in the scene 12, for example the seats 14, will therefore have a mechanical vibration relative to the camera 10. The mechanical vibrations of the seats 14 cause a movement of image areas in the video images acquired by the camera 10 that depicts the vibrating objects. In the illustrated scene, each bus seat 14, in particular its backrest, vibrates (typically back and forth). The vibration has a small amplitude and a frequency in the range of 2-10 Hz. An image region 13 depicting the backrest of a seat 14 is illustrated with a coding block structure applied in a sequence of images 13a-13d. By coding block is meant a group of pixels that have been encoded. The coding block has a defined size, for example 16x16 pixels or 32x32 pixels. In contrast, by image block is meant a group of pixels that have not (yet) been encoded. The image block is also of a defined size which can be set separately to the coding block size. The image region 13 moves back and forth in the sequence of images 13a-13d corresponding to the seat's 14 mechanical vibration. By following the position of the star 14a-14d in the sequence of images 13a-13d, this movement can be observed. Each of the coding blocks will be encoded with motion vectors and residuals to accurately represent the movement between each of the consecutive images 13a-13d. For example, the coding block including the star 14b will likely be encoded with a motion vector corresponding to a different in position between the star 14b and the star 14a of the previous image 13a. The need for encoding with motion vectors for an image area that changes position between image frames is particularly necessary when the image area depicts a textured surface, as in the illustrated embodiment, but exists in other scenes as well.

Due to the need to determine motion vectors and residuals for each block, the encoding becomes relatively complex and expensive in terms of generated bits in the encoded video when compared to encoding of an image area depicting a static (non-moving) object.

A second source of increased bitrate is lighting variation. In an interior of a vehicle, such as the bus 11, lighting variations can be caused by a combination of that the vehicle is moving and that natural light is partly obscured by trees or other objects in the environment outside the vehicle. This will cause a flickering light in the scene of the onboard camera. One example is when the bus 11 drives by a tree with foliage that obscures sunlight from reaching the bus windows. The tree forms a spotty shadow which in turn causes flickering sunlight in the vehicle interior when moving through the shadow. Another source of lighting variations is when the bus 11 is in movement and drives by a series of artificial lights, for example tunnel lighting or lamp posts along a road at night. The artificial light sources will illuminate parts of the scene 12 and the illumination will travel through the scene 12 periodically. For an image part in the scene 12, for example the image region 13, the lighting variation will cause a cyclic variation in pixel values due to the varying illumination. Specifically, the pixel values will go up and down in a cyclic manner. Corresponding to encoding of image areas depicting mechanical vibration, image blocks in the affected region need to be encoded with motion vectors and residuals to accurately represent the cyclic change in pixel values. Thus, the lighting variation causes a relatively complex and expensive encoding in terms of generated bits.

The inventors have realized that the value added to the video by representing changes due to mechanical vibration or lighting variation in a detailed manner is low. Meanwhile, the bitrate increase caused by the precise encoding of the affected image regions can have high impact on requirements for storage and streaming of the video, especially in the case of continuous recording that is a common recording mode for onboard cameras. It is therefore suggested to identify image regions with mechanical vibration or lighting variations, hereafter also referred to as "variations", and encode these regions with a method that results in encoded image regions with a lowered number of bits, thereby decreasing the overall bitrate of the video.

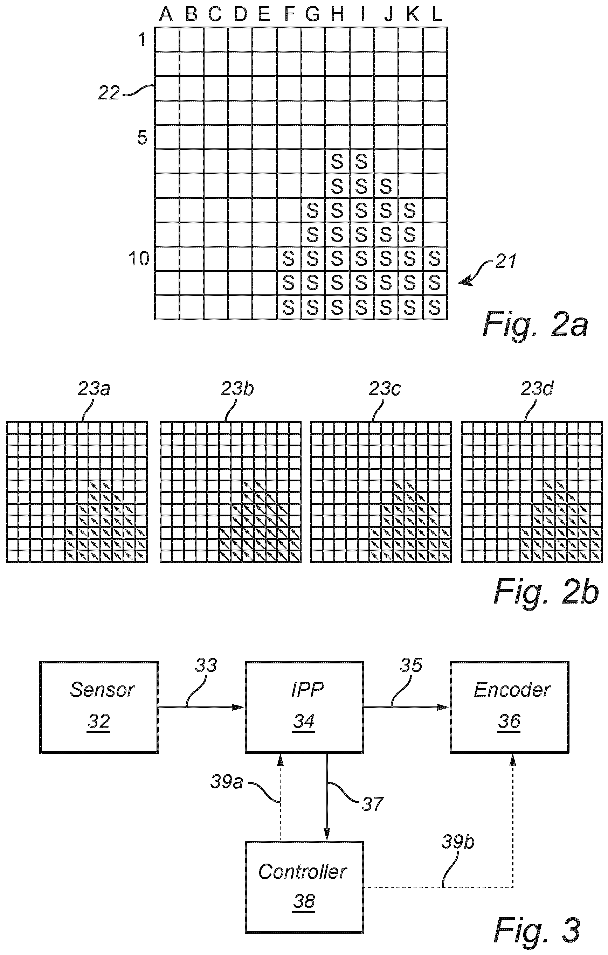

To identify image regions with variations, images are analyzed before being encoded. In particular, image statistics generated by an image processing pipeline, IPP 34, illustrated in Fig. 3, are evaluated. The IPP 34 is a common part of an imaging device (such as the camera 10) and is constructed for handling an image data stream comprising image data capturing by an image sensor 32. The (unencoded) image data is forwarded from the image sensor 32 to the IPP 34 (as indicated by 33). The IPP 34 comprises components for performing, e.g., gain adjustments, exposure (shutter) adjustments, pre-processing (e.g. remove effects, such as dead pixels, caused by sensor defects), white balance (WB) adjustments, post-processing (e.g. noise filtering, contrast enhancement, sharpening), and setting encoder parameters. The image statistics generated by the IPP 34 can be seen as data providing a condensed representation of processed image data at different stages (at different components) in the IPP 34. The statistics are typically generated by and can be obtained from a processing part of the IPP 34. One known purpose of this kind of statistic is adjusting settings for components in the IPP 34, for example gain settings or WB settings.

It is known for an image pipeline 34 to generate block statistics in the form of block sum values and blocks variance values. Both these types of block statistics can be generated in various stages of the image pipeline 34. For the purpose of the described methods, it may be beneficial to retrieve block sum values or block variance values that are generated at one of the last stages of the image pipeline 34 wherein the block statistics better represent a final image that is output from the image pipeline 34, compared to earlier stages. The size of the image blocks that the statistics are generated based on may be, for example, 8x8 pixels or 16x16 pixels. A block sum value for an image block corresponds to the sum of all pixel values in the image block. A block variance value corresponds to the spread of pixel values around the mean value for the pixel values in the image block. Variance in the context of this application is calculated according to standard mathematical methods.

To find image areas depicting objects affected by mechanical vibrations or lighting variations in the scene 12, a processing device in the form of a controller 38 obtains (as indicated by 37) statistic values for an image sequence, comprising a plurality of consecutive images, from the IPP 34. The controller 38 evaluates the obtained statistic values of block sum values or block variance values for identifying neighboring blocks that each have a cyclic variation in blocks sum values or block variance values during the image sequence. In other words, the controller 38 evaluates how block sum values or block variance values varies for image blocks during the image sequence. The obtaining of statistic values (as indicated by 37) can be implemented by accumulating statistics for the sequence of images and then performing the evaluation. In other words, the IPP 34 may be arranged to send image statistic values to the controller 38 per image frame and the controller 38 may store the received image statistics to form a series of statistic values corresponding to the image sequence.

The evaluation of statistical values may be performed block wise. For a first image block, the statistic value (block sum value or block variance value) for the first image block during the image sequence is evaluated. If the statistic value exhibits a cyclic variation, the statistic value for each of the neighboring image blocks to the first image block is evaluated in the same manner. When a further image block is found among the neighboring image blocks to have a cyclic pattern, i.e. cyclic variation, in its statistic values, a group of neighboring image blocks is formed with the first image blocks and the further image blocks. Neighboring image blocks to the further image blocks are also evaluated with respect to the same type of statistical value. Any neighboring block that fulfils the condition of having a cyclic variation in its statistical value along the image sequence is added to the group of neighboring image blocks. The evaluation is performed on neighboring image blocks to the image blocks in the group of neighboring image blocks until no new neighboring image blocks fulfilling the condition are found. The group of neighboring image blocks is then fully determined. With reference to Fig. 2a, an example of how the group of neighboring image block may be formed will now be provided. Fig. 2a illustrates a part of an image in an image sequence. Starting with image block A1 (in the upper left corner), the image blocks are evaluated block by block to identify any cyclic pattern in their statistic values during the image sequence. Once an image block H6 has been identified to have the cyclic pattern, the neighboring (not yet evaluated) image blocks I6, H7 are evaluated. In this example, these image blocks I6, H7 also have a cyclic pattern. The image blocks H6, I6, and H7 now form a group of neighboring image blocks. The neighboring image blocks to each of the latest identified image blocks I6, H7 are evaluated in a next iteration, which will result in an expansion of the group of neighboring image blocks with image blocks I7 and H8. The expansion of the group of neighboring image blocks continues until all neighboring image blocks to already identified image blocks have been evaluated and added or not added to the group of neighboring image blocks depending on the outcome. The image blocks of the final group of neighboring image blocks are marked with "S" in Fig. 2a. In other embodiments, the evaluation pattern may be set up differently. For example, neighboring may be defined as not only those image blocks sharing a side with the identified image block but also those image blocks sharing only a corner. This could lead to a faster expansion of the group of neighboring image blocks which would cover a larger image area.

Further groups of neighboring image blocks may be formed. Thus, a single image can have a plurality of (separate) groups of neighboring images blocks.
As mentioned, the statistic values are determined on an image block level. The image block size when determining the statistics may be set in view of a coding block size used by an encoder 36 that is arranged to encode the images. For this purpose, the coding block size may be obtained from the encoder 36 and the size of the image blocks that statistics are determined for in the IPP 34 may be set to a corresponding size. By corresponding is here meant a relative size difference between the coding block and the image block, or vice versa, is within a factor of 4. In addition, it is preferred not to set the image block size smaller than the coding block size. The controller 38 may be arranged to obtain a coding block size from the encoder 36 and to set the size of the image blocks in the IPP 34. In one embodiment, the controller 38 is arranged to set the image block size equal to twice, or four times the coding block size. An advantage with setting the image block size so that it corresponds to the coding block size is that it adds a correlation between identified image areas with variation and caused increase in bitrate. If the image blocks are significantly smaller than the coding blocks, changes detected in the statistics values will not affect the coding. On the other hand, if the image block is significantly larger than the coding block, herein meaning more than four times the size of the coding block, variations that affect the coding blocks may not be captured by the block sum. Setting the image block size corresponding to the coding block size increases the precision in the method of finding the image areas with variations, and lowers the risk of triggering special encoding to areas which encoding will not be affected by the variations in terms of increased bitrate. In addition, an image block size that is unnecessarily small will become more processing heavy and it is also for this purpose interesting to find an optimal image block size.

In addition, it should be noted that it is preferred that the image blocks are aligned with the coding blocks, meaning that the block grids are aligned.

It has been described that statistical values for images in an image sequence are evaluated. The length of the image sequence should be selected to cover preferably a plurality of periods of the cyclic pattern. In one embodiment, at least 5 cycles are preferred to establish a certainty of the cyclic pattern. For a vibration or variation in the range of 2-10 Hz and a frame rate at 30 FPS, an image sequence of 15-75 frames is needed for covering at least 5 cycles.

In one embodiment, the frame rate for acquiring images by the image sensor 32, corresponding to the frame rate of the image sequence processed by the IPP 34, is set in view of a frequency of an expected mechanical vibration. In order to resolve the cyclic pattern in pixel values or moving image area, irrespective of pattern shape, the frame rate may be set in the range 2-10 times the expected vibration frequency. For example, if the expected frequency is 2 Hz, an FPS value for the image sensor should be set to a value in the interval of 4-20 frames per second. If an expected frequency is 5 Hz, an FPS value for the image sensor should be set to a value in the interval of 10-50 frames per second. If a plurality of vibration frequencies are expected, the FPS value should be set to at least twice the highest of the expected vibration frequencies to avoid the risk of identifying cyclic patterns due to aliasing effects. A higher FPS value than 10 times the expected vibration frequency does not have an adverse effect on the present invention, however it will lead to increased processing requirements.

Once the image sequence has been evaluated for determining groups of neighboring image blocks, the controller 38 generates instructions for encoding the identified one or more groups of neighboring blocks. The instructions are sent to the encoder 36. Specifically, the instructions comprise encoding instructions that are selected for the purpose of resulting in a lower bitrate compared to if the image blocks are encoded in a standard manner. Put differently, the encoding instructions override the standard encoding approach implemented in the encoder 36 which would result in a higher long-term bitrate.

There are different options for how the instructions can be sent from the controller 38 to the encoder 36. In one embodiment, the instructions form part of a coding block control map that defines encoding characteristics for the whole image. The coding block control map may be generated by the IPP 34 and transmitted or transferred (as indicated by 35) to the encoder 36 along with processed image frames to be encoded. For this purpose, the controller 38 may transfer the instructions to the IPP 34 (as indicated by 39a) which includes the instructions as part of the coding block control map for the concerned image frames. In another embodiment, the instructions are sent to the encoder 36 directly from the controller 38 (as indicated by 39b) and thus form additional instructions to a coding block control map sent from the IPP 34 to the encoder 36. In this embodiment, the encoder 36 is adapted to receive and implement the instructions from the controller 38. The transmission or transfer of instructions may be performed over a wired or wireless connection.

Regardless of how the instructions are sent to the encoder 36, they can be sent on a regular basis or when deemed necessary. For example, the controller 38 may be arranged to evaluate each image sequence of N frames, for example 50 frames, and generate and transmit instructions for each evaluation. Alternatively, the controller 38 may generate and transmit instructions only when a group of neighboring image blocks is identified during the evaluation. In another variant, the evaluation may occur with less frequency, for example image sequences of 200 frames, every Xth frame or once every Y seconds. In this variant, the last sent instructions to the encoder 36 are implemented in the encoding of all image frames until new instructions are received. Alternatively, if the instructions are sent to the IPP 34, the IPP may include the last sent instructions in every coding block control until updated instructions are received from the controller 38.

A first alternative of instructions includes encoding all image blocks of the group of neighboring image blocks as skip blocks as illustrated in Fig. 2a in which a grid of coding blocks 22 that covers a part of an image is illustrated. A group of neighboring coding blocks 21 are indicated by "S" meaning that they are encoded as skip blocks (or skipped macroblock). The group of coding blocks 22 corresponds to the group of neighboring image blocks identified by the controller 38.

A skip block is a block for which no image information is encoded, only an indication that the block is a skip block. Instead of encoding blocks for each subsequent frame, the encoder 36 simply marks coding blocks as skip blocks without motion vector and predicted errors. When decoding the skip block, content is reconstructed by looking into previously encoded blocks in a reference image. In one possible configuration of skip blocks, the motion vector of the skip block is determined as the motion vector from one or more spatially neighboring blocks. In that case, the motion vector of the skip block can be set to a motion vector of a neighboring block which is then used for reconstructing skip block content/data from the reference image. A configuration of determining the motion vector of the skip block in view of a neighboring block is a useful feature when encoding an image area with blocks having the same motion vector, as in some embodiments described herein.

A second alternative of instructions includes encoding all image blocks of the group of neighboring image blocks with identical motion vectors. Fig. 2b illustrates the same group of neighboring coding blocks as Fig. 2a for an image sequence 23a-23d, wherein the identified group of neighboring image blocks has been encoded with identical motion vectors instead of being coded as skip blocks. The identical motion vector for a group of neighboring coding blocks is determined to represent the movement of the whole image area that is represented. In the example of a bus seat 14, a group of neighboring image blocks may represent a backrest of a seat and the motion vector for encoding the image blocks is determined to represent the general movement from mechanical vibration. The identical motion vector may be determined in different ways for achieving this purpose.

In one embodiment, the motion vector is set to zero for all images. This embodiment creates a similar effect to the alternative of setting the coding blocks to skip blocks, namely a frozen visual appearance of the affected image areas when displaying the video.

In another embodiment, the identical motion vector is determined by analyzing groups of neighboring encoded blocks to find a representative motion vector. For each image 23a-23d, the identical motion vector (which is identical for all coding blocks in the group of neighboring image blocks) is set to the representative motion vector. In Fig. 2b, it can be seen that the identical motion vectors for the images 23a-23d are different between images to represent the scene area with movement or cyclic illumination. A better visual appearance may thereby be achieved compared to setting all identical motion vectors to zero, however at a slightly larger bit cost.

A first way to determine the identical motion vector is to analyze a group of neighboring coding blocks in a sequence of images previous to the image sequence to be encoded. The identical motion vector is set to be the average of the motion vectors used when encoding the group of neighboring coding blocks.

A second way to determine the identical motion vector is to analyze a group of neighboring image blocks to be encoded. The group of neighboring image blocks are test encoded in a standard manner and the resulting motion vectors are studied. By "test encoded" is meant that the result of the encoding is only used for finding the identical motion vector. The test encoding may be performed by a processing device of the controller 38 or by the encoder 36. An average of the motion vectors may be selected as the identical motion vector for the real encoding the group of neighboring image blocks (that was analyzed). In one variant, the group of neighboring image blocks is scaled down before test encoding. The motion vector that has the highest occurrence in the test encoded image blocks is selected as the identical motion vector. The scale down could be in the order of two times or four times downscaling. The selected motion vector needs to be scaled up in a corresponding manner to match the scaling of the group of neighboring image blocks to be encoded before being included in the encoding instructions. In addition to setting identical motion vectors for a group of neighboring image blocks, the residual for the image blocks may be set to the same value. Identical residuals in combination with identical motion vectors result in a lowered bit cost for the encoded images. The residual can be set to zero, which would minimize the bit cost for encoding the residual values in the group of neighboring image blocks.

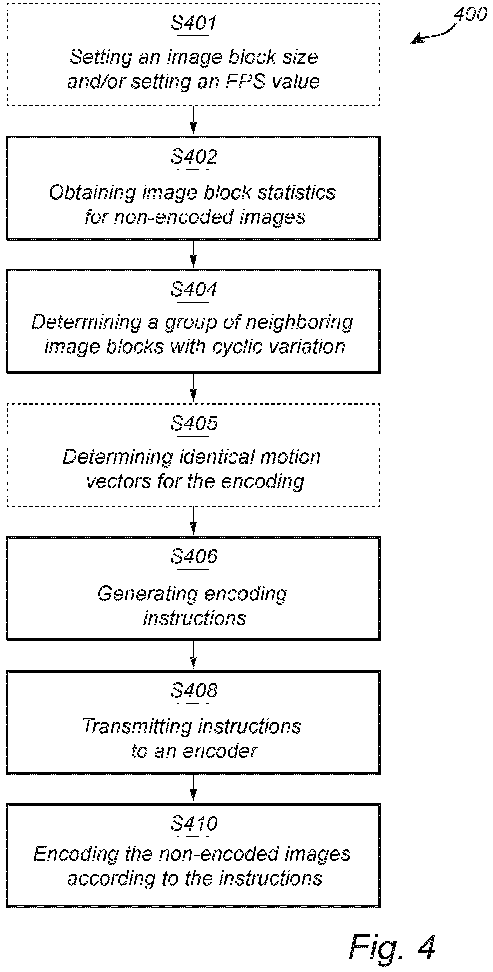

Principles and embodiments of the present invention will now be summarized with reference to Fig. 4 which illustrates a method 400 of controlling encoding of image frames according to one embodiment. Steps that are illustrated in dashed squares are optional and can be selectively skipped or included in the method 400 to form different embodiments.

In a first step S401, an initial configuration of setting an image block size and/or setting an FPS value for the image sensor is performed, as explained in detail above. In a next step S402, image block statistics are obtained for non-encoded images in an image sequence. The image block statistics are generated for image blocks of the set block size, and the image sequence is acquired with the set FPS value. In a next step S404, a group of neighboring image blocks having a cyclic variation (also referred to as cyclic pattern or cyclic change above) is determined. Identical motion vectors for the encoding are determined in step S405 which can be performed in various ways as explained in detail above. Next, encoding instructions are generated in step S406 followed by transmitting the instructions to an encoder in step S408. The instructions may be transmitted directly to the encoder or via another device (e.g., the IPP), as described with examples above. In step S410, the non-encoded images are encoded in accordance with the received instructions. It is noted that the instructions typically do not comprise instructions for the whole image, but rather instructs the encoder to encode particular image blocks (namely, the identified one or more groups of neighboring image blocks) in a particular way. These instructions override the standard encoding, or any other encoding instructions, that the encoder otherwise would implement for the concerned image areas.

The steps S401 to S408 may be performed by a processing device of the camera 10, which can be part of the controller 38.

Referring again to Fig. 3, the functionality of the elements disclosed herein, for example the IPP 34, the controller 38 and the encoder 36, may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry, or circuitry, as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the described functionality. When the hardware is a processor which may be considered a type of circuitry, the circuitry, means, or units are a combination of hardware and software, the software being used to configure the hardware and/or processor.

The components may be implemented in a structurally separated way, meaning that one component (for example, the IPP 34) may perform its operation on a first device (not illustrated) and transmit image data to a second device (not illustrated) for processing by another component (for example, the encoder 36). In Fig. 3, the IPP 34 and the controller 38 are illustrated as separate components, however it is noted that the controller 38 may be incorporated in the IPP 34, preferably as a component in the later stages, or even form the last stage, of the IPP 34.

It will be appreciated that a person skilled in the art can modify the above-described embodiments in many ways and still use the advantages of the invention as shown in the embodiments above. Thus, the invention should not be limited to the embodiments shown, but should only be defined by the appended claims. Additionally, as the skilled person understands, the embodiments shown may be combined.

## Claims

1. A method of controlling encoding of image frames depicting a scene, the method comprising:
obtaining (S402) image block statistics for a sequence of non-encoded image frames comprising block sum values or block variance values;
determining (S404) a group of neighboring image blocks in which each image block has a cyclic variation of block sum values or block variance values during the sequence of non-encoded image frames;
generating (S406) instructions for an encoder to encode the identified group of neighboring image blocks as skip blocks or having identical motion vectors; and
providing (S408) the instructions to an encoder for encoding the sequence of non-encoded image frames.

2. The method according to claim 1, comprising generating instructions for an encoder to encode the identified group of neighboring image blocks as having identical motion vectors, wherein the identical motion vector is zero.

3. The method according to claim 1, comprising generating instructions for an encoder to encode the identified group of neighboring image blocks as having identical motion vectors, wherein the method further comprises
determining an average motion vector for the group of neighboring coding blocks in a sequence of previous encoded images; and
setting the identical motion vector to the average motion vector.

4. The method according to claim 1, comprising generating instructions for an encoder to encode the identified group of neighboring image blocks as having identical motion vectors, wherein the method further comprises:
applying a scale down to the group of neighboring image blocks during a sequence of images, thereby generating a sequence of scaled down group of image blocks;
encoding the scaled down group of image blocks;
identifying a motion vector in the encoded scaled down group of image blocks that has the highest occurrence in the encoded scaled down group of image blocks;
applying a scale up to the motion vector to revert to the original scale of the group of neighboring image blocks; and
setting the identical motion vector to the identified motion vector.

5. The method according to any one of the preceding claims, comprising generating instructions for an encoder to encode the identified group of neighboring image blocks as having identical motion vectors and identical residuals.

6. The method according to claim 5, wherein the identical residual is zero.

7. The method according to any one of the preceding claims, further comprising
obtaining a coding block size from the encoder; and
setting (S401) a size of the image block to correspond to the coding block size for obtaining image block statistics.

8. The method according to claim 7, comprising setting the size of the image block to at least the coding block size.

9. The method according to claim 7 or 8, comprising setting the size of the image block one of: equal to, twice, and four times the coding block size.

10. The method according to any one of the preceding claims, wherein the instructions form a part of a coding block control map for encoding.

11. The method according to any one of the preceding claims, wherein the method further comprises:
obtaining a vibration frequency corresponding to an expected vibration of objects in the scene;
determining a minimum FPS value as twice the obtained vibration frequency; and
acquiring the sequence of non-encoded image frames with a frame rate equal to at least the minimum FPS value.

12. A processing device of a video capturing device (10) for controlling encoding of image frames depicting a scene, the processing device being adapted to
obtain, from an image pipeline processor (34) of the video capturing device (10), image block statistics for a sequence of non-encoded image frames comprising block sum values or block variance values;
identify a group of neighboring image blocks in which each image block has a cyclic variation of block sum values or block variance values during the sequence of non-encoded image frames;
generate instructions for an encoder (36) to encode the identified group of neighboring image blocks as skip blocks or having identical motion vectors; and
provide the instructions to the encoder (36) of the video capturing device for encoding the sequence of image frames.

13. The processing device according to claim 12 being further adapted to
obtain a vibration frequency corresponding to an expected vibration of objects in the scene;
determine a minimum FPS value as twice the obtained vibration frequency; and
instruct an image sensor to acquire the sequency of non-encoded image frames with a frame rate equal to at least the minimum FPS value.

14. The processing device according to any one of claims 12-13 being further adapted to
obtain a coding block size from the encoder;
determine an image block size for obtaining image block statistics to correspond to the coding block size; and
instruct the image pipeline processor to determine image block statistics for image blocks of the determined image block size.

15. A computer program product comprising computer program code portions configured to perform the method of any one of claims 1-11, when executed by a processing device.
